(19) Europäisches Patentamt
European Patent Office
Office européen des brevets

(11) **EP 1 687 148 B2**

(12) **NOUVEAU FASCICULE DE BREVET EUROPEEN**
Après la procédure d'opposition

(45) Date de publication et mention de la décision concernant l'opposition:
**28.12.2016 Bulletin 2016/52**

(45) Mention de la délivrance du brevet:
**08.01.2014 Bulletin 2014/02**

(21) Numéro de dépôt: **04805851.5**

(22) Date de dépôt: **19.11.2004**

(51) Int Cl.:
**B41J 11/00** *(2006.01)*     **B41J 3/407** *(2006.01)*

(86) Numéro de dépôt international:
**PCT/FR2004/050608**

(87) Numéro de publication internationale:
**WO 2005/051668 (09.06.2005 Gazette 2005/23)**

(54) **ROBOT D'IMPRESSION NUMERIQUE GRAND FORMAT EN TROIS DIMENSIONS SUR UNE SURFACE FIXE ET PROCEDE D'IMPRESSION METTANT EN OEUVRE AU MOINS UN TEL ROBOT.**

ROBOTER FÜR DREIDIMENSIONALEN GROSSFORMAT-DIGITALDRUCK AUFE INER FESTGELEGTEN FLÄCHE UND MINDESTENS EINEN SOLCHEN ROBOTER EINSETZENDES DRUCKVERFAHREN

ROBOT FOR LARGE-FORMAT, THREE-DIMENSIONAL DIGITAL PRINTING ON A FIXED SURFACE AND PRINTING METHOD INVOLVING AT LEAST ONE SUCH ROBOT

(84) Etats contractants désignés:
**AT BE BG CH CY CZ DE DK EE ES FI FR GB GR HU IE IS IT LI LU MC NL PL PT RO SE SI SK TR**

(30) Priorité: **24.11.2003 FR 0350891**

(43) Date de publication de la demande:
**09.08.2006 Bulletin 2006/32**

(73) Titulaires:
• **CENTRE NATIONAL DE LA RECHERCHE SCIENTIFIQUE -CNRS-**
**75016 Paris (FR)**
• **Université de Poitiers**
**86962 Fururoscope Chasseneuil Cedex (FR)**

(72) Inventeurs:
• **GAZEAU, Jean-Pierre, Henri, Laurent**
**F-86100 CHATELLERAULT (FR)**
• **LALLEMAND, Jean-Paul**
**F-86280 SAINT-BENOIT (FR)**
• **RAMIREZ TORRES, José Gabriel**
**F-86000 POITIERS (FR)**
• **ZEGHLOUL, Said**
**F-86800 TERCE (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
EP-A- 0 970 811          EP-A- 1 065 055
EP-A2- 0 455 371         EP-A2- 0 931 649
WO-A-03/031081           WO-A-2004/016438
DE-A1- 3 737 455         DE-A1- 19 634 582
US-A1- 2001 017 085

**Description**

**DOMAINE TECHNIQUE**

La présente invention concerne un robot d'impression numérique grand format en trois dimensions sur une surface fixe et un procédé mettant en oeuvre au moins un tel robot. Le domaine de l'invention est notamment celui de l'impression de motifs sur des véhicules, par exemple des camions, des autocars, des wagons, des avions...

**ETAT DE LA TECHNIQUE ANTERIEURE**

Certaines imprimantes grand format de l'art connu permettent d'effectuer une impression automatique et directe d'une image numérisée de grand format sur un support consommable adhésif du type papier, ou du type bâche conditionnée en rouleau. Dans ce dernier cas, le consommable se déroule au fur et à mesure de l'avancement de l'impression, et la tête d'impression est animée d'un mouvement rectiligne uniforme.

Dans le domaine plus particulier d'une impression sur un véhicule, une telle impression nécessite l'immobilisation de ce véhicule pendant plusieurs jours. Une fois le support imprimé, celui-ci est ensuite positionné et fixé sur le véhicule. Une telle impression peut être réalisée de la façon suivante :

- soit manuellement par un peintre, directement sur le support consommable. Dans ce cas le coût est évidemment important.
- soit numériquement par exemple sur la bâche plastique d'une remorque, qui peut être démontée et conditionnée en rouleau.

Une telle technique d'impression présente de nombreux inconvénients, notamment un coût élevé et un nombre important d'opérations à effectuer.

D'autres documents de l'art connu envisagent une impression sur véhicule.

Le document référencé [1] en fin de description décrit un dispositif muni d'une tête d'impression permettant de réaliser des décorations sur des objets volumineux. Ces objets peuvent être des murs, ou des véhicules. Cette tête d'impression est montée sur un moyen mobile dans les trois dimensions le long de la surface à décorer. Elle comporte un bâti dans lequel sont disposés une multiplicité d'éléments d'impression rangés en quatre colonnes. Les éléments d'impression d'une même colonne permettent la projection d'une même couleur, que ce soit de l'encre ou une peinture acrylique. En cours de fonctionnement, les éléments d'impression sont alimentés en permanence en couleur par l'intermédiaire de conduits connectés au bâti. Les éléments d'impression sont montés individuellement mobiles en coulissement dans le bâti, par l'intermédiaire de systèmes motorisés commandés par un calculateur, connecté à un capteur de forme. Ce capteur de forme détermine le relief de la surface à imprimer et commande le déplacement des éléments d'impression de manière à ce que les extrémités de ceux-ci, qui comportent les buses de projection, soient toujours à la même distance de la surface.

Le document référencé [2] décrit un robot de peinture automatique par exemple sur la surface extérieure d'un véhicule automobile. Ce dispositif comprend des têtes de pulvérisation de différentes encres, des moyens de commande de déplacement de ces têtes selon une direction $\overrightarrow{Ox}$, des moyens de commande de déplacement selon une direction $\overrightarrow{Oy}$ et des moyens de commande de déplacement selon une direction $\overrightarrow{Oz}$ par rapport à la surface à peindre, qui permettent de maintenir une distance constante entre la surface à peindre et lesdites têtes. Dans ce document les têtes suivent le profil de la surface à peindre mais ne changent pas leur orientation pour garder le parallélisme avec la surface. Le robot réalise uniquement un suivi en profondeur. Ceci implique qu'à certains endroits, la distance avec la surface est différente pour chacune des quatre têtes. De plus, ce suivi de profil nécessite un processus de lecture de profondeur par rapport à la surface préalable au processus d'impression. Ce processus de lecture se réalise de façon automatique, à l'aide d'un palpeur mécanique. On obtient alors un maillage (plus ou moins fin, selon la complexité de la surface) qui décrit cette profondeur à différents endroits. Ce processus de lecture peut prendre plusieurs dizaines de minutes.

L'invention a pour objet de simplifier les robots de l'art connu en proposant un robot d'impression à cinq axes motorisés permettant d'imprimer une surface, sans démontage préalable, en utilisant une technologie d'impression jet d'encre pour réduire les coûts, et une technologie numérique pour pouvoir réaliser l'impression de n'importe quelle image ou photo, quelle que soit sa complexité. Avec cette invention, le séchage de l'encre sur le support est instantané ; il n'y a donc pas de temps d'immobilisation supplémentaire lié au séchage.

**EXPOSÉ DE L'INVENTION**

L'invention concerne un robot d'impression grand format en trois dimensions sur une surface fixe, comprenant un ensemble d'impression à jet d'encre, des moyens de déplacement et d'orientation de cet ensemble d'impression

EP 1 687 148 B2

selon plusieurs axes, au moins une unité de contrôle de ces moyens et un dispositif de séchage de l'encre projetée sur ladite surface, caractérisé en ce que ledit robot est un robot d'impression à cinq axes motorisés, et en ce que ces moyens de déplacement et d'orientation comprennent :

- un porteur à trois degrés de liberté en translation, qui assure le positionnement de l'ensemble d'impression en permettant des translations horizontale, verticale et en profondeur de celui-ci,
- un poignet à deux degrés de liberté en rotation qui supporte et assure l'orientation de l'ensemble d'impression, en permettant des rotations de celui-ci selon deux axes perpendiculaires.

Avantageusement le porteur comprend :

- un premier chariot mobile muni d'un système d'entraînement se déplaçant sur deux rails horizontaux et,
- une poutre fixée perpendiculairement au premier chariot mobile, un second chariot mobile muni d'un système d'entraînement se déplaçant sur deux rails verticaux montés sur cette poutre,
- une glissière fixée perpendiculairement au second chariot mobile, un plateau mobile se déplaçant le long de cette glissière.

Avantageusement le poignet comprend deux systèmes identiques vis/bielles/manivelles reliés chacun à un chariot mobile.

Avantageusement le poignet supporte un dispositif de séchage de l'encre. Un élément important dans la conception du robot est le mécanisme parallèle original utilisé : avantageusement il offre deux rotations correspondant aux quatrième et cinquième axes du robot d'impression.

Ce système permet de ramener les axes de rotation très proches de la surface des têtes d'impression. Ainsi la rotation de l'ensemble d'impression par rapport à l'axe $\vec{Oy}$ se fait autour d'un point invariant P de la surface de l'ensemble d'impression. Cela évite de coupler les axes du porteur à la commande de la rotation d'axe $\vec{Oy}$.

Avantageusement le robot comprend cinq servomoteurs associés respectivement aux cinq axes de ce robot. Il peut comprendre, en entrée :

- plusieurs capteurs optiques pour mesurer la distance entre l'ensemble d'impression et la surface à imprimer,
- cinq codeurs des axes moteurs pour connaître le déplacement des servomoteurs,
- deux capteurs de fin de course et un capteur de prise d'origine associés respectivement à chaque axe du robot.

Avantageusement le robot comprend un dispositif de contrôle temps réel qui comprend :

- un module unité centrale,
- au moins un module de contrôle d'axes,
- un module d'entrées-sorties numériques.

Avantageusement le robot comprend un dispositif de contrôle général qui comporte :

- un module de contrôle temps réel,
- un module d'interfaçage/relayage et de conditionnement des signaux capteurs,
- un module d'alimentation/instrumentation,
- un module d'alimentation frein,
- un module de gestion sécurité,
- un ensemble de ventilation,
- cinq variateurs numériques moteurs.

Avantageusement le robot comprend :

- un premier terminal informatique dédié au contrôle des mouvements de ce robot,
- un second terminal informatique dédié à la supervision robot comprenant :

  • la coordination entre le déplacement du robot et le travail d'impression,
  • le traitement de l'image numérique à imprimer,
  • l'interfaçage homme-machine.

Avantageusement l'ensemble d'impression comprend au moins un bloc d'impression muni de plusieurs têtes

3

d'impression utilisant des encres de couleurs différentes. Chaque bloc d'impression peut comprendre quatre têtes d'impression utilisant respectivement des encres de couleur jaune, cyan, magenta et noir. Les encres peuvent être des encres à séchage ultra-violet.

L'invention concerne, également, un procédé d'impression mettant en oeuvre au moins un robot tel que défini ci-dessus, qui, après une étape préalable de numérisation d'une image et une découpe de celle-ci en bandes de largeur déterminée, comprend les étapes suivantes :

- positionnement d'un support par rapport au (x) robot(s),
- initialisation du (ou des) robot(s) et positionnement des têtes de celui-ci (ceux-ci) par rapport à la surface du support, à l'endroit où doit commencer l'impression de l'image,
- impression de l'image avec impression successive des différentes bandes verticales constituant l'image,
- retour à une configuration de repos.

Avantageusement ce procédé comprend une étape préalable de préparation de la surface de manière à la rendre propre et blanche uniforme.

Avantageusement l'impression commence au coin inférieur gauche de la surface, et les bandes verticales ont une largeur d'environ 7 cm.

Contrairement au document référencé [2] cité ci-dessus, le robot de l'invention permet de réaliser un suivi de profil tout en gardant un parallélisme avec la surface grâce aux deux articulations du poignet qui permettent de modifier l'orientation et l'inclinaison de l'ensemble des têtes d'impression. De plus aucun processus de lecture préalable n'est requis. Le robot de l'invention possède un ensemble de capteurs laser qui lui permettent de suivre la surface du support en temps réel. Ce suivi est réalisé de façon à garder une vitesse constante d'impression sur la surface (contrôle en vitesse).

Le robot de l'invention permet de réaliser une impression sur de nombreux types de surfaces, par exemple sur des remorques de camion planes ou cylindriques, sur des murs. La cinématique de l'ensemble d'impression qui se déplace dans l'espace permet une adaptation de son mouvement à la forme du support à imprimer.

Le robot de l'invention permet d'envisager de réaliser une impression directement par exemple sur des murs, des panneaux publicitaires, en plaçant le robot d'impression sur le plateau d'un véhicule.

Les perspectives de développement du robot de l'invention sont donc nombreuses en termes d'applications possibles. Dans le domaine de l'impression sur un véhicule, l'impression devient, en effet, possible dans un délai maximal de deux heures (si on considère l'exemple du camion avec une surface à imprimer de 18 m x 3 m) si l'on utilise deux robots situés de part et d'autre de ce véhicule, alors qu'une telle impression nécessitait jusqu'à présent une immobilisation plus longue, le coût final estimé étant bien supérieur pour le client.

La technologie utilisée dans le robot de l'invention permet une impression automatique d'une image numérique sur une surface en trois dimensions avec une qualité d'impression de 180 dpi en 16 millions de couleurs. La qualité peut être étendue à 360 dpi avec un double passage. L'encre ultra-violette (UV) utilisée permet une impression sur des supports variés : bâche, tôle laquée, mur peint,... Un dispositif de séchage intégré permet le séchage instantané par polymérisation de l'encre sur le support.

Le champ des applications potentielles de l'invention est important au vu de la place prise par l'image dans un monde où la communication est placée au premier plan, notamment dans le secteur de la publicité.

**BRÈVE DESCRIPTION DES DESSINS**

La figure 1 illustre le robot d'impression numérique de l'invention,
les figures 2a et 2b illustrent l'utilisation d'une rotation Ry d'axe $\overrightarrow{Oy}$ du robot de l'invention,
les figures 3a et 3b illustrent l'utilisation d'une rotation Rx d'axe $\overrightarrow{Ox}$ du robot de l'invention,
la figure 4 illustre schématiquement la cinématique du porteur du robot de l'invention,
les figures 5a et 5b illustrent une vue de côté et une vue de dessus du robot de l'invention, avec orientation du poignet de celui-ci,
les figures 6 à 8 illustrent ce poignet, et le fonctionnement de celui-ci,
la figure 9 illustre le diagramme de contexte des données du contrôle de l'impression en trois dimensions (3D),
la figure 10 illustre l'ensemble des composants relatifs à l'impression,
la figure 11 illustre l'ensemble des composants du dispositif de séchage,
la figure 12 illustre le dispositif de contrôle général du robot de l'invention,
la figure 13 illustre l'alimentation des actionneurs du robot de l'invention.

## EXPOSÉ DÉTAILLÉ DE MODES DE RÉALISATION PARTICULIERS

Le robot 10 de l'invention est un robot d'impression à cinq axes motorisés : trois en translation et deux en rotation. Ce robot 10 permet de déplacer et d'orienter dans l'espace un ensemble d'impression 13 comprenant au moins un bloc d'impression 18 muni de plusieurs têtes d'impression 14 à jet d'encre, par exemple quatre têtes projetant respectivement des encres de couleurs jaune, cyan, magenta, et noir, par rapport à la surface 11 d'un support 12 à imprimer qui reste fixe.

La cinématique de ce robot se veut la plus simple possible. Elle fait appel à des produits du commerce (axes de transfert, commande,...) couramment utilisés.

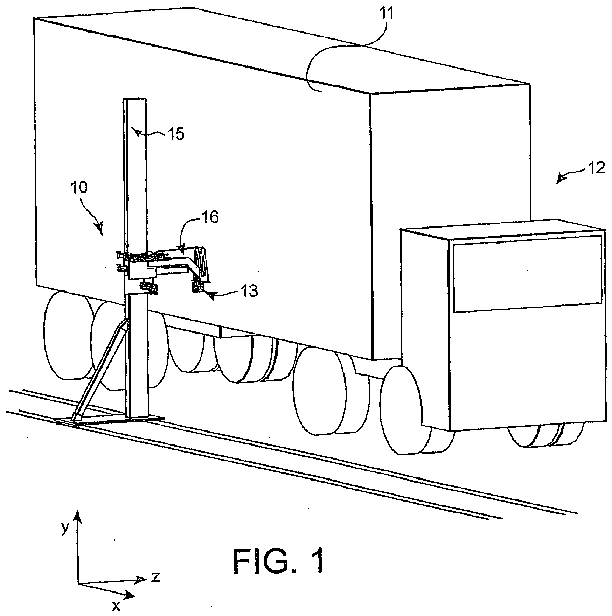

La figure 1 illustre le robot de l'invention 10 utilisé pour une impression trois dimensions sur la surface 11 d'un support 12, par exemple la surface extérieure 11 d'un camion 12.

Ce robot d'impression 10 comporte :

- un ensemble d'impression 13 comprenant au moins un bloc d'impression 18 muni de têtes d'impression à jet d'encre 14, par exemple de couleurs différentes,
- un porteur 15 à trois degrés de liberté en translation qui assure le positionnement de l'ensemble d'impression 13 en permettant des translations horizontale (Tx), verticale (Ty) et en profondeur (Tz) de celui-ci,
- un poignet 16 à deux degrés de liberté en rotation qui assure l'orientation de l'ensemble d'impression 13 en permettant des rotations (Rx, Ry) de celui-ci, selon deux axes perpendiculaires.

Pour le porteur 15 :

- La première translation Tx selon l'axe $\overrightarrow{Ox}$ permet au robot 10 de parcourir toute la longueur de la surface 11 : c'est le premier axe du robot,

- La seconde translation Ty selon l'axe $\overrightarrow{Oy}$ permet au robot 10 de se déplacer sur la hauteur de la surface : c'est le second axe du robot,

- La troisième translation Tz selon l'axe $\overrightarrow{Oz}$ permet au bras du robot de se rapprocher ou de s'éloigner de la surface 11 pour suivre une déformation sur cette surface ou pour corriger une erreur de positionnement de celle-ci : ce troisième axe du robot apporte le troisième degré de liberté au robot 10, et permet une impression en trois dimensions.

Pour le poignet 16 :

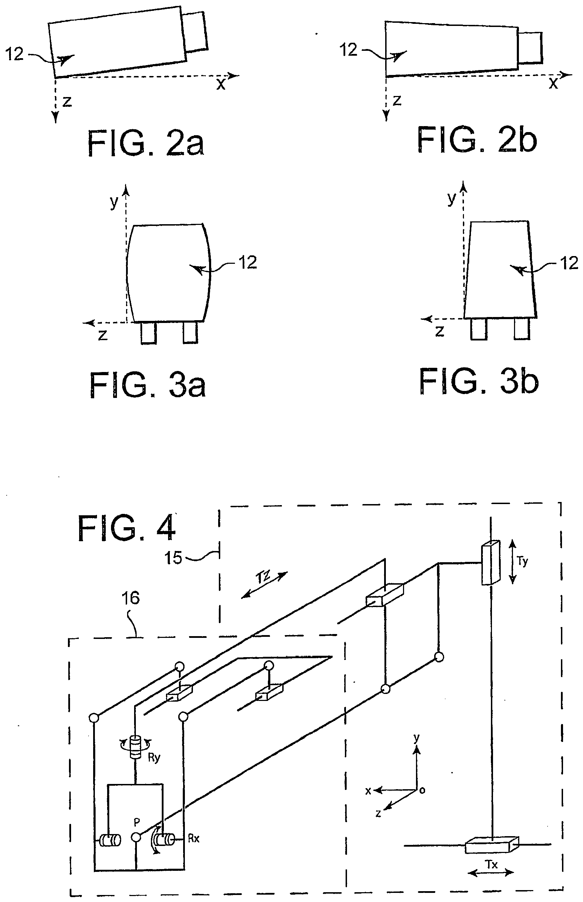

- La première rotation Ry d'axe $\overrightarrow{Oy}$, qui correspond au quatrième axe du robot 10, permet d'orienter l'ensemble d'impression 13 pour corriger une erreur de positionnement de la surface 11 ou pour assurer le suivi d'une surface plane inclinée selon l'axe $\overrightarrow{Ox}$, comme illustré sur les figures 2a et 2b.
- La deuxième rotation Rx d'axe $\overrightarrow{Ox}$, qui correspond au cinquième axe du robot 10, permet d'orienter l'ensemble d'impression 13 pour assurer le suivi d'une surface non plane selon l'axe $\overrightarrow{Oy}$ ou d'une surface inclinée, comme illustré sur les figures 3a et 3b.

Le schéma cinématique du robot 10 de l'invention, illustré sur la figure 4, permet de mettre en évidence ces trois translations Tx, Ty et Tz et ces deux rotations Rx et Ry.

Les courses suivantes sont ainsi possibles avec l'exemple de l'impression sur camion, les paramètres articulaires étant notés qi, i=1 à 5 :

$$0mm \leq q1 \leq 19000mm \quad (Tx)$$

$$0mm \leq q2 \leq 4000mm \quad (Ty)$$

$$-250mm \leq q3 \leq 250mm \quad (Tz)$$

$$-10° \leq q4 \leq 10° \quad (Ry)$$

$$-20° \leq q5 \leq 20° \quad (Rx).$$

On note que ces courses pour les paramètres q1 et q2 ne sont pas limitées, elles peuvent être augmentées pour pouvoir sur les mêmes bases avoir un robot capable d'imprimer sur des surfaces plus importantes. Les variations des paramètres q1 et q2 (par exemple 19000 mm et 4000 mm) correspondent aux dimensions maximales des surfaces à imprimer augmentées de 1 mètre. En effet, l'impression s'opérant à vitesse constante, une zone d'accélération et de décélération est prévue pour l'axe q2. Dans le cas du paramètre q1, cette distance supplémentaire permet de palier une erreur de positionnement, ou apporte une possibilité de dégagement du robot, pour prendre la position de rangement par exemple. Les butées du paramètre q3 sont définies relativement à l'erreur maximale admise sur le positionnement du support 12. Les paramètres q4 et q5 interviennent uniquement au niveau des réglages d'orientation du robot d'impression 10. Leurs valeurs restent faibles, les butées du paramètre q5 étant plus larges, ce qui permet d'imprimer sur des surfaces convexes.

Pour la mise en oeuvre de ce robot 10, le camion 12 par exemple peut être rangé par son chauffeur sur une aire d'impression. Un marquage au sol ainsi que des guides peut alors l'aider dans sa manoeuvre. Un espace libre suffisamment important peut être prévu à chaque extrémité du robot pour que le chauffeur puisse ranger le camion sans avoir à manoeuvrer.

Lorsque le camion 12 est en place, un mécanisme composé d'élévateurs (de type crics hydrauliques) et d'un niveau peut assurer l'horizontalité du camion. Le réglage peut être contrôlé manuellement. Ainsi, une seule cible suffit à définir le référentiel lié au camion.

Réalisation mécanique du robot 10

1) Mécanique du porteur 15

Le porteur 15 du robot 10 doit permettre d'embarquer l'ensemble des moyens de contrôle du robot, ainsi que l'ensemble des moyens d'impression et de séchage de l'encre. Cette structure peut être entièrement réalisée avec des profilés en aluminium.

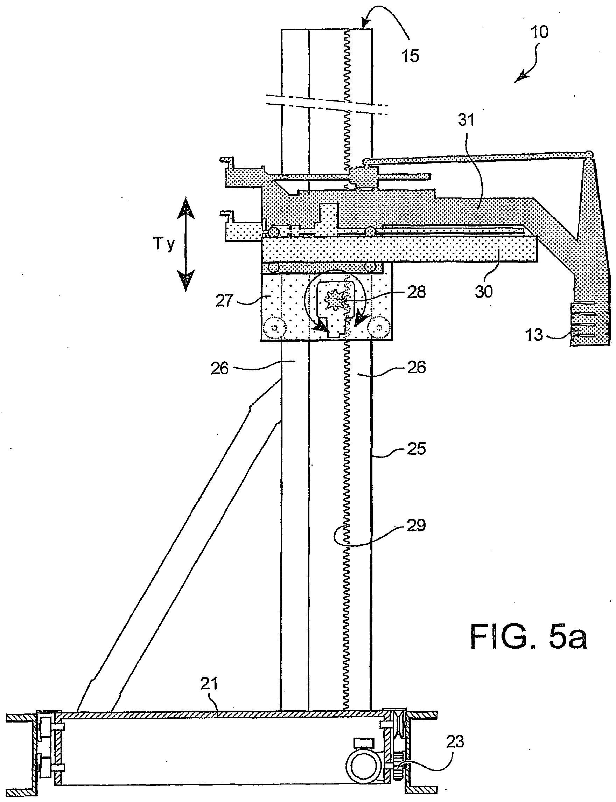

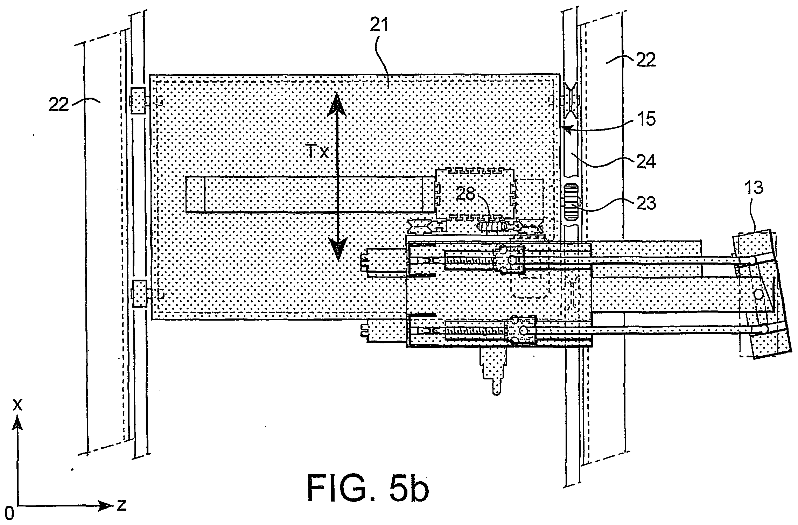

Comme illustré sur les figures 5a et 5b, le porteur 15 comprend trois parties identifiées pour chacun des axes du robot 10 :

. Première partie (premier axe)

Cette première partie comprend un chariot mobile 21, qui constitue la base du robot 10. Ce chariot 21 est supporté par exemple par quatre galets plats. Des galets de came peuvent être placés en vis-à-vis des autres galets, pour s'assurer du non déraillement du chariot 21. Ce chariot 21 se déplace sur deux rails horizontaux 22. Le système d'entraînement peut se composer d'un pignon moteur 23 monté sur le chariot mobile et d'une crémaillère 24 fixée sur un des rails.

- Deuxième partie (deuxième axe)

Cette deuxième partie comprend une poutre 25 d'une longueur par exemple de quatre mètres, spécialement conçue pour supporter de fortes charges, qui est fixée perpendiculairement au chariot mobile 21. Deux rails verticaux 26 sont montés sur cette poutre 25. Un chariot mobile 27 se déplace le long des rails 26 par exemple par l'intermédiaire de quatre galets en 'v'. Le système d'entraînement peut se composer d'un pignon moteur 28 monté sur le chariot mobile et d'une crémaillère 29 fixée sur un des rails. Cet axe est sollicité durant le processus d'impression. On peut utiliser des rails rectifiés, dont les tolérances d'usinage sont plus faibles.

. Troisième partie (troisième axe)

Cette troisième partie comprend une glissière 30 d'une longueur par exemple de 0,8 mètres qui est fixée perpendiculairement au chariot 27 de la deuxième partie, par l'intermédiaire d'une pièce de déport. Un plateau mobile 31, supporté par exemple par quatre galets, se déplace le long de cette glissière 30. Un système vis-écrou assure l'entraînement du plateau 31.

La première partie du porteur assure un déplacement de l'ensemble d'impression 13 suivant l'axe $\overrightarrow{Ox}$, c'est-à-dire un déplacement horizontal parallèle au plan d'impression. La course du déplacement suivant le premier axe peut atteindre 18 mètres ou plus.

La deuxième partie assure un déplacement vertical de l'ensemble d'impression 13 selon l'axe $\overrightarrow{Oy}$. Cet ensemble d'impression 13 est directement installé sur le chariot 27 de la deuxième partie.

La troisième partie assure un déplacement en profondeur selon l'axe $\overrightarrow{Oz}$ qui permet d'ajuster la distance entre la surface à imprimer 11 et l'ensemble d'impression 13.

2) <u>Mécanique du poignet 16</u>

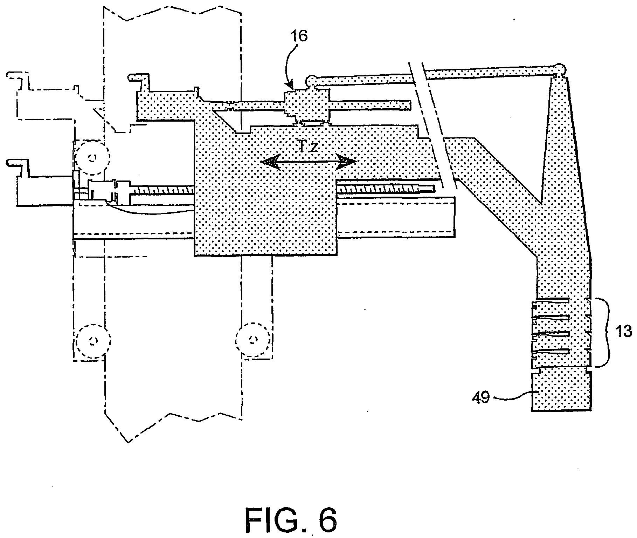

Comme illustré sur les figures 6 à 8 le poignet 16 permet deux rotations Rx et Ry correspondant aux quatrième et cinquième axes du robot 10. Ce poignet 16 permet de ramener les axes de rotation très proches de la surface des têtes d'impression. Ainsi, la rotation de la tête Ry par rapport à l'axe $\overrightarrow{Oy}$ se fait autour d'un point invariant de la surface des têtes d'impression. Cela évite de coupler les axes du porteur 15 à la commande de la rotation Ry d'axe $\overrightarrow{Oy}$.

Le poignet 16 comprend deux systèmes identiques 40 et 40', fonctionnant chacun autour d'un ensemble « vis 41 (41') / bielles 42 (42')/ manivelle 43 (43') » relié à un chariot mobile 44 (44'). Cette architecture parallèle utilise deux translations pour obtenir les deux rotations des têtes d'impression.

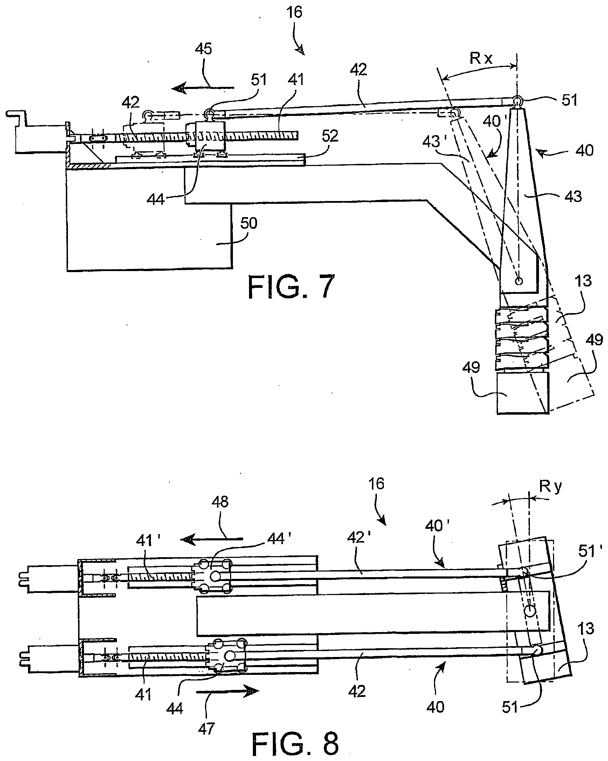

En animant les deux vis, on obtient les deux mouvements de rotation attendus. En effet, si les deux vis 41 et 41' tournent dans le même sens, les chariots 44 et 44' se translatent (flèche 45) dans le même sens, la rotation Rx s'effectue autour de l'axe $\overrightarrow{Ox}$, comme illustré sur la figure 7. Si par contre, les vis 41 et 41' tournent en sens inverse, les deux chariots se translatent en sens opposé (flèches 47 et 48), dans ce cas la rotation Ry s'effectue autour de l'axe $\overrightarrow{Oy}$, comme illustré sur la figure 8.

La fonction du poignet 16 est donc double :

- il sert de support à l'ensemble d'impression 13, ainsi qu'au dispositif de séchage 49, par exemple une lampe UV, permettant le séchage instantané de l'encre, par exemple UV, projetée sur la surface 11 ;
- il permet également l'orientation de l'ensemble d'impression 13 par rapport à la surface 11. Le contrôle de cette orientation permet de suivre le relief de cette surface 11.

Sur la figure 7 est également représenté un dispositif de contrôle 50 permettant la régulation de l'alimentation en encre de l'ensemble 13 d'impression.

Le troisième axe, c'est-à-dire l'axe de translation suivant l'axe $\overrightarrow{Oz}$, permet d'amener les têtes d'impression à proximité de la surface à imprimer 11. L'ensemble des composants du poignet comprend plus précisément :

- deux vis à billes 41 et 41' ;
- deux bielles 42 et 42' ;
- quatre liaisons de rotules 51 et 52' ;
- deux manivelles 43 et 43'
- deux chariots ou coulisseaux 44 et 44' ;
- deux rails 52.

<u>Motorisation du robot 10</u>

La motorisation du robot 10 intègre cinq servomoteurs sans balai (« brushless ») nécessaires pour mouvoir les cinq axes de celui-ci. Les éléments liés à la motorisation concernent donc les éléments principaux suivants :

- cinq actionneurs et leurs résolveurs ;
- deux réducteurs pour les axes $\overrightarrow{Ox}$ et $\overrightarrow{Oy}$;
- cinq variateurs numériques pour le pilotage des axes moteur ;

<u>Contrôle/commande du robot 10</u>

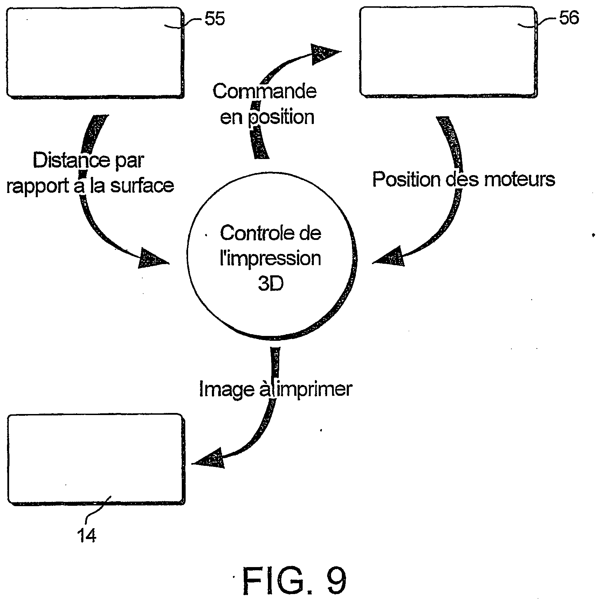

La figure 9 représente le diagramme de contexte des données du système de contrôle de l'impression en trois dimensions.

Les éléments à contrôler ou sorties du système sont :

- les cinq axes du robot 10 afin de positionner/orienter l'ensemble d'impression 13 par rapport à la surface à imprimer 11 ;

- les têtes d'impression 14 : par exemple quatre têtes couleur (Bleu, Cyan, Magenta, Noir) ;
- le dispositif de séchage, par exemple une lampe UV.

Ce système comprend, en entrée :

- quatre capteurs optiques 55 pour mesurer la distance entre l'ensemble des têtes d'impression 14 et la surface à imprimer 11 ;
- cinq codeurs des axes moteurs 56 pour connaître le déplacement des moteurs ;
- les capteurs de fin de courses (deux par axe) et de prise d'origine (un par axe).

L'architecture globale de contrôle du robot s'articule autour des composants matériels suivants :

- un dispositif de contrôle temps réel ;
- des actionneurs et des servo-amplificateurs ;
- l'ensemble d'impression ;
- le dispositif de séchage de l'encre ;
- un dispositif de contrôle général ;
- des capteurs.

• Un dispositif de contrôle temps réel

Le rôle de ce dispositif de contrôle temps réel est de permettre le développement de l'application logicielle réelle temps réel spécifique au contrôle simultané des cinq axes du robot. Cette application permet de gérer le déplacement des têtes d'impression avec une vitesse linéaire constante par rapport à la surface 11. Cette application intègre le calcul du modèle cinématique inverse du robot. Cette application permet de maintenir une distance déterminée par rapport à la surface 11 ainsi que d'assurer le parallélisme des têtes d'impression 14 sous le contrôle des capteurs optiques.
Ce dispositif comporte par exemple les modules suivants :

- un module unité centrale (CPU) temps réel de supervision du mouvement du robot 10 avec un système opératif temps réel ;
- deux modules de contrôle d'axes ;
- un module entrées-sorties numériques.

L'ensemble de ces modules communique par l'intermédiaire d'un bus de communication industriel spécifique.

• Des actionneurs et des servo-amplificateurs

Les actionneurs sont alimentés en puissance par leur variateurs-positionneurs numériques. Ces servomoteurs d'axes sont des moteurs synchrones à aimants et résolveur. Leurs variateurs sont totalement numérisés : traitement du résolveur, boucle de courant et de vitesse. Un variateur numérique est un servo-amplificateur de vitesse pour moteur synchrone auto-piloté avec utilisation d'un résolveur comme capteur de position et de vitesse. Il assure la régulation en vitesse et en courant, la commande de puissance et les fonctions de sécurité.
Parmi les actionneurs possibles, deux comportent un frein et une sonde thermique de protection pour le déplacement horizontal et le déplacement vertical.

• L'ensemble d'impression

L'ensemble d'impression fourni par exemple par la société XAAR utilise des têtes d'impression dédiées à une impression de haute qualité pour une surface imprimable de grande dimension. Cet ensemble d'impression comporte un certain nombre de composants spécifiques relatif au pilotage des têtes d'impression d'une part et à l'alimentation en encre de ces têtes d'autre part.

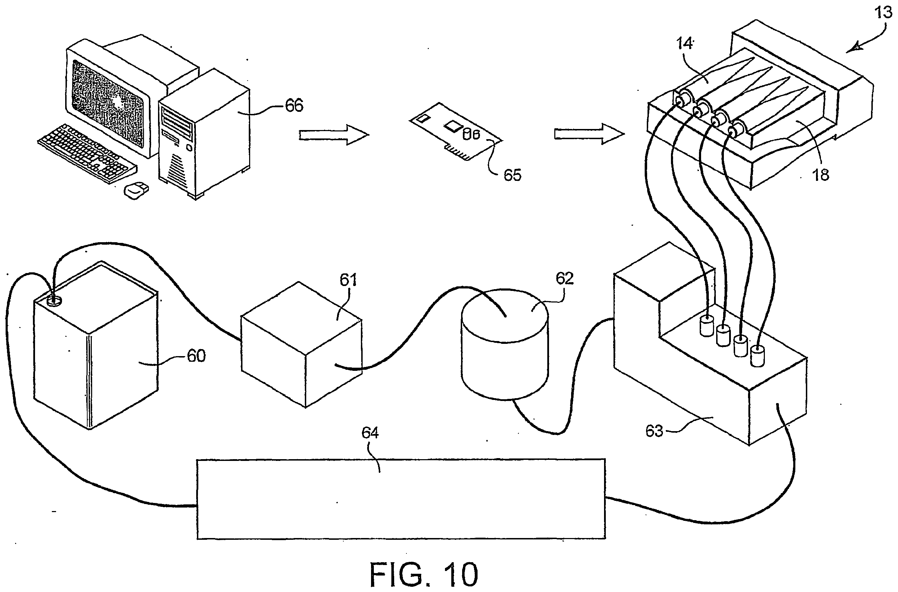

La figure 10 représente les quatre têtes d'impression 14 installées sur leur châssis. On y distingue les orifices relatifs à l'alimentation en encre. Le châssis utilisé permet un montage précis des têtes d'impression de façon à obtenir un plan de référence et un alignement des têtes quasi parfait.
La figure 10 présente également l'intégration des autres composants relatifs à l'impression :

- un bidon d'encre 60, une pompe 61, un filtre 62, un réservoir de tête 63, et une unité 64 de contrôle de l'alimentation en encre des têtes ;

- une carte d'interface 65 et de contrôle des têtes d'impression pour le transfert de l'image et le pilotage de l'impression depuis un terminal 66, par exemple de type PC ("Personal Computer").

Un dispositif annexe permet l'amorçage des têtes d'impression.

• Le dispositif de séchage de l'encre

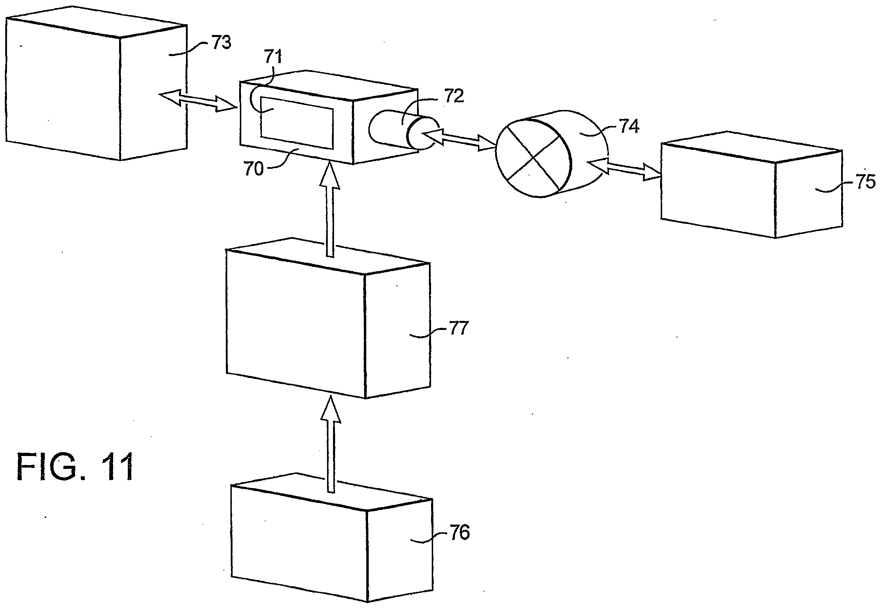

Le dispositif de séchage de l'encre permet le séchage instantané de l'encre sur la surface 11 par polymérisation. Les composants matériels relatifs au dispositif de séchage sont les suivants, comme illustré sur la figure 11 :

- une lampe UV 70 munie d'un obturateur 71 et d'une extraction d'air 72 ;
- une unité de contrôle 73 de cette lampe 70 ;
- un moteur 74 pour l'extraction de l'air chaud ;
- une admission en air comprimé 76 (régulateur de pression 77 et filtre 75).

Le dispositif de séchage requiert une installation spécifique dans la mesure où une alimentation en air comprimé 72 est requise. Cette alimentation permet la fermeture ou l'ouverture de l'obturateur 71 de la lampe 70 ; on pourrait éventuellement choisir une technique autre que pneumatique pour fermer ou ouvrir l'obturateur. La pression d'alimentation est, par exemple, de 5 bars. Un régulateur de pression 77 est installé sur le robot 10 pour assurer une alimentation à 5 bars à l'entrée de l'unité de contrôle de la lampe. L'alimentation en entrée de régulateur 77 est comprise entre 5 et 10 bars. Un filtre 75 est également associé à ce régulateur de pression afin de filtrer l'air ainsi que l'huile.

L'unité de contrôle permet l'alimentation électrique de la lampe 70 ainsi que l'ouverture et la fermeture de l'obturateur 71 de la lampe 70 grâce à la commande d'une électrovanne. Cette unité de contrôle est interfacée avec le dispositif de contrôle du robot via des relais de commande pour le pilotage de l'obturateur 71 et de la lampe 70.

• Un dispositif de contrôle général

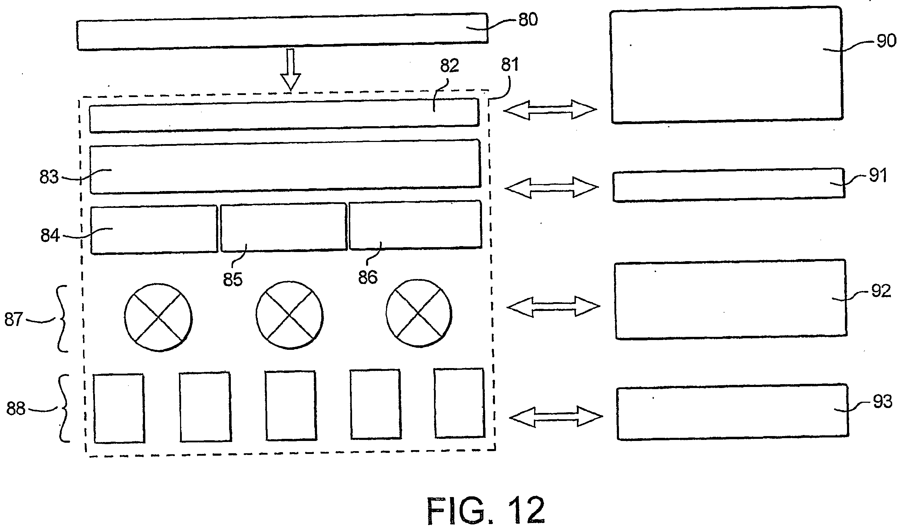

Comme illustré sur la figure 12, un panneau de commande opérateur 80 est relié à ce dispositif de contrôle général 81 qui comprend :

- un module de contrôle temps réel 82,
- un module 83 d'interfaçage/relayage et de conditionnement des signaux capteurs,
- un module d'alimentation/instrumentation 84,
- un module d'alimentation frein 85,
- un module de gestion sécurité 86,
- un ensemble de ventilation 87,
- cinq variateurs numériques moteurs 88.

A ces différents modules sont reliés :

- un terminal 90 de supervision et de pilotage de l'impression,
- un dispositif 91 de contrôle de la lampe,
- des capteurs 92 qui comprennent des capteurs optiques, des capteurs de fin de course, des capteurs de prise d'origine,
- un ensemble 93 comprenant à la fois les moteurs et résolveurs et les freins.

Ce dispositif de contrôle général 81 intègre l'ensemble des organes nécessaires au contrôle de l'ensemble du robot 10, ces organes concernant :

- l'alimentation électrique des actionneurs ;
- la gestion de la sécurité (arrêt d'urgence et surveillance de mise en défaut) ;
- l'alimentation électrique et le câblage des capteurs ;
- l'alimentation électrique et la gestion des deux freins sur les axes moteurs concernés ;
- l'interface avec le dispositif de séchage pour sa commande ;
- l'alimentation électrique générale de tous les composants ;
- le câblage de ce dispositif de contrôle et de toutes ses entrées-sorties pour le contrôle logiciel de tous les composants.

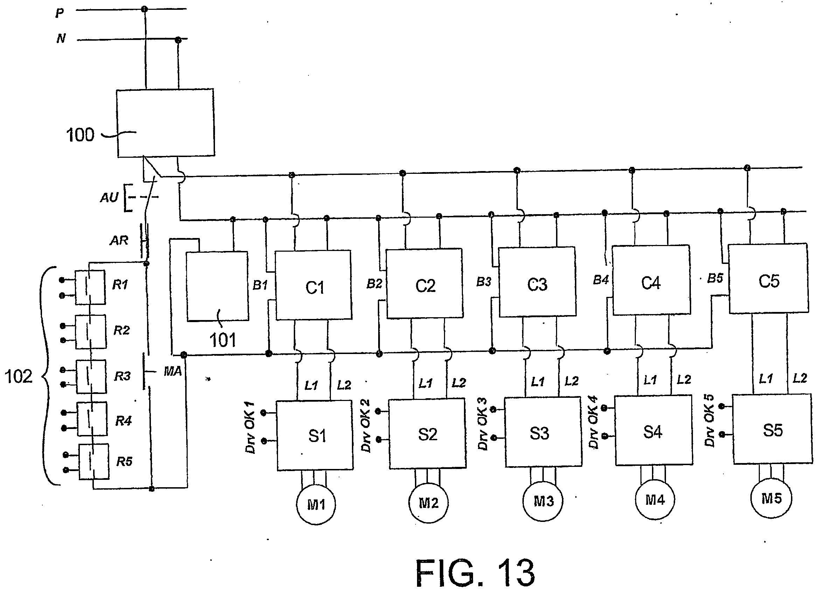

Le schéma de principe pour le câblage de l'alimentation électrique des servo-amplificateurs est présenté sur la figure 13.

Sur cette figure sont représentés :

- un disjoncteur 100,
- une alimentation frein 101,
- des contacteurs C1 à C5 avec leurs bobines respectives B1 à B5,
- des servomécanismes S1 à S5
- des moteurs M1 à M5,
- des relais à contact R1 à R5 pilotés par la sortie 102 du servomécanisme n° i avec :
- P, N : Phase, Neutre d'une alimentation monophasée 240V CA,
- MA : Marche,
- AR : Arrêt,
- AU : Arrêt d'urgence.

• Des capteurs

L'instrumentation du robot est constituée de deux types de capteurs :

- des capteurs proprioceptifs pour la connaissance des informations internes de prise d'origine et de fin de course ;
- des capteurs extéroceptifs pour la connaissance de la distance entre les têtes d'impression et la surface 11.

Les capteurs optiques utilisés pour la mesure de la distance par rapport à la surface 11 sont des capteurs laser linéaires directement fixés sur le châssis des têtes d'impression.

L'architecture logicielle du robot 10

L'application logicielle développée pour contrôler l'ensemble du robot 10 s'articule autour de deux postes informatiques distincts :

- un premier terminal informatique basé sur le dispositif de contrôle temps réel avec un système d'exploitation en temps réel embarqué ;
- un second terminal informatique basé sur l'utilisation d'un ordinateur de type PC ("Personal Computer") par exemple sous environnement Windows. Ce second terminal peut également au choix être embarqué ou non.

Chacun de ces terminaux a un rôle distinct au sein du contrôle global du robot 10.

Le premier terminal informatique est dédié uniquement au contrôle des mouvements du robot d'impression. Le logiciel développé intègre l'asservissement du déplacement des têtes d'impression par rapport à la surface 11. Cet asservissement impose un déplacement rectiligne de l'ensemble des têtes d'impression (de bas en haut) avec une vitesse linéaire constante (au maximum 0,51m/s) tout en maintenant une distance fixée par rapport à la surface 11 (cette distance est inférieure à 3 mm pour garantir une bonne qualité d'impression).

Le second terminal informatique est dédié à la supervision du robot d'impression 10. Le logiciel développé sous environnement Windows assure plusieurs fonctions parmi lesquelles :

- la coordination entre le déplacement du robot 10 et le travail d'impression (communication avec le dispositif de contrôle temps réel pour la synchronisation) ;
- le traitement de l'image numérique à imprimer (découpage et décomposition quadrichromique) ;
- l'interfaçage homme-machine.

L'algorithme général du contrôle du robot est le suivant :

01- **Chargement** de l'image numérique à imprimer
02- **Découpage** de l'image en N bandes de largeur 500 pixels
03- **Décomposition** de chaque bande en 4 images binaires monochrome (décomposition YCMB)
04- **Initialisation** du robot
05 - **Préchauffage** de la lampe UV
06- **Positionnement** du porteur par rapport à la surface
07- **Positionnement** de l'ensemble des têtes d'impression par rapport à l'image d'origine

(suite)

08- **DEBUT** de l'impression
09- **TANT QUE** No_Bande_En_Cours<N
10-             **FAIRE**
11-                     **DEBUT** Asservissement du mouvement vertical du robot
12-                     **Ouverture** volet de la lampe UV
13-                     **DEBUT Impression** de la bande courante
14-                     **SI** distance/support <3mm
15-                             **ALORS** Asservissement OK
16-                     **SINON** correction de la distance/support
17-             **TANT QUE** (Fin_De_bande non atteinte) **OU** Sécurité_OK
18-             **SI** (Fin_De_bande non atteinte)
19-                     **ALORS**
20-                             **Arrêt** Impression
21-                             **Fermeture** volet de la lampe UV
22-                             **FIN** Asservissement
23-             **SINON**
24-                     **Traitement** du problème
25-             **Déplacement** au début de la bande suivante
26- **Impression OK :** Retour en position de repos du robot

Exemple d'un mode de réalisation

L'invention permet d'installer des sites d'impression itinérants ou fixes. Si l'on prend l'exemple des camions, on peut par exemple proposer, sur les aires de repos des centres routiers, de la même façon qu'un lavage de remorque, une impression de remorque. Il s'agit d'imprimer une décoration publicitaire, le logo de l'entreprise commanditaire ou simplement une image décorative. L'image à imprimer est alors disponible sur un support numérique (disquette, clé USB ("Universal Serial Bus"), CD-ROM ("Compact Disc Read Only Memory"), ... etc.).

Le mot "itinérant" indique que le robot de l'invention 10 peut être déplacé sur sites différents au cours de l'année, sur des périodes de plusieurs mois, qui peuvent être fixées en tenant compte des dates et lieux d'affluence.

Dans le cas d'une l'impression sur camion, le chauffeur a ainsi la possibilité ainsi de laisser son camion « le temps d'une pause ». Le processus d'impression à l'aide du robot de l'invention 10 peut alors être mis en route.

Les supports à imprimer peuvent être de dimension très variées. Les dimensions extrêmes peuvent être des surfaces à 3 m x 18 m (hauteur x longueur).

Les supports à imprimer peuvent être de deux types différents :

- en tôle (isotherme)
- en vinyle (pour les bâches).

Les surfaces sont très peu déformées et si elles le sont, les rayons de courbure sont très importants.

La résolution d'impression est de 180 ppp (point par pouce, ce qui équivaut à 180 points pour 25,4 mm) avec une impression en un seul passage et de 360 ppp pour une impression en deux passages. Généralement, pour des impressions grand format destinées à l'affichage extérieur, une résolution de l'ordre de 75 ppp est suffisante.

L'impression est quadricouleur, les quatre couleurs sont le cyan, le magenta, le jaune et le noir. Pour obtenir des couleurs imprimées identiques aux couleurs du modèle, on peut passer, au préalable, sur la surface 11 une couche d'apprêt blanc.

Avec le prototype réalisé, l'impression d'une image se déroule de gauche à droite, de bas en haut, par bandes verticales de 70 mm de largeur.

La vitesse maximale d'impression est de 2,142m$^2$/min avec une résolution de 180 ppp.

REFERENCES

[1] FR 2 795 662

[2] EP 0 970 811

**Revendications**

1. Robot d'impression grand format en trois dimensions sur une surface fixe (11), comprenant un ensemble d'impression (13) à jet d'encre, des moyens de déplacement et d'orientation de cet ensemble d'impression selon plusieurs axes, au moins une unité de contrôle de ces moyens et un dispositif de séchage de l'encre projetée sur ladite surface (11), ledit (10) robot étant un robot d'impression à cinq axes motorisés, dans lequel lesdits moyens de déplacement et d'orientation comprennent:

   - un porteur (15) à trois degrés de liberté en translation, qui assure le positionnement de l'ensemble d'impression (13) en permettant des translations horizontale (Tx), verticale (Ty) et en profondeur (Tz) de celui-ci,
   - un poignet (16) à deux degrés de liberté en rotation qui supporte et assure l'orientation de l'ensemble d'impression (13) en permettant des rotations (Rx, Ry) de celui-ci selon deux axes perpendiculaires ;

   **caractérisé en ce que** le poignet (16) comprend deux systèmes identiques (40, 40') vis (41, 41')/bielles (42, 42')/manivelles (43, 43') relié chacun à un chariot mobile (44, 44').

2. Robot selon la revendication 1, dans lequel le porteur (15) comprend:

   - un premier chariot mobile (21) muni d'un système d'entraînement se déplaçant sur deux rails horizontaux (22),
   - une poutre (26) fixée perpendiculairement au premier chariot mobile (21),
   - un second chariot mobile (28) muni d'un système d'entraînement se déplaçant sur deux rails verticaux (27) montés sur cette poutre (26),
   - une glissière (30) fixée perpendiculairement au second chariot mobile (28),
   - un plateau mobile (30) se déplaçant le long de cette glissière (30).

3. Robot selon l'une des revendications précédentes, dans lequel le poignet (16) supporte le dispositif de séchage de l'encre.

4. Robot selon la revendication 3, comprenant cinq servomoteurs associés respectivement aux cinq axes de ce robot.

5. Robot selon la revendication 4, qui comprend en entrée.

   - plusieurs capteurs optiques pour mesurer la distance entre l'ensemble d'impression (13) et la surface à imprimer (11),
   - cinq codeurs des axes moteurs pour connaître le déplacement des servomoteurs,
   - deux capteurs de fin de course et un capteur de prise d'origine associés respectivement à chaque axe du robot.

6. Robot selon la revendication 5 comprenant un dispositif de contrôle temps réel qui comprend:

   - un module unité centrale,
   - au moins un module de contrôle d'axes,
   - un module d'entrées-sorties numériques.

7. Robot selon la revendication 6 comprenant un dispositif de contrôle général qui comprend:

   - un module de contrôle temps réel (82),
   - un module (83) d'interfaçage/relayage et de conditionnement des signaux capteurs,
   - un module d'alimentation/instrumentation (84),
   - un module d'alimentation frein (85),
   - un module de gestion sécurité (86),
   - un ensemble de ventilation (87),
   - cinq variateurs numériques moteurs (88).

8. Robot selon la revendication 7 comprenant:

- un premier terminal informatique dédié au contrôle des mouvements de ce robot,
- un second terminal informatique dédié à la supervision robot comprenant:

• la coordination entre le déplacement du robot et le travail d'impression,
• le traitement de l'image numérique à imprimer,
• l'interfaçage homme-machine.

9. Robot selon la revendication 1, dans lequel l'ensemble d'impression comprend au moins un bloc d'impression (18) muni de plusieurs têtes d'impression (14) utilisant des encres de couleurs différentes.

10. Robot selon la revendication 9, dans lequel chaque bloc d'impression comprend quatre têtes d'impression utilisant respectivement des encres de couleur jaune, cyan, magenta et noir.

11. Robot selon la revendication 9, dans lequel les encres sont des encres à séchage ultra-violet.

12. Procédé d'impression mettant en oeuvre au moins un robot selon l'une quelconque des revendications précédentes, qui, après une étape préalable de numérisation d'une image et une découpe de celle-ci en bandes de largeur déterminée, comprend les étapes suivantes :

- positionnement d'un support par rapport au(x) robot(s),
- initialisation du (ou des) robot(s) et positionnement des têtes de celui-ci (ceux-ci) par rapport à la surface du support, à l'endroit où doit commencer l'impression de l'image,
- impression de l'image sur ladite surface avec impression successive des différentes bandes verticales constituant l'image,
- retour à une configuration de repos.

13. Procédé selon la revendication 12, qui comprend une étape préalable de préparation de la surface de manière à le rendre propre et blanc uniforme.

14. Procédé selon la revendication 12, dans lequel l'impression commence au coin inférieur gauche de la surface.

15. Procédé selon la revendication 12, dans lequel les bandes verticales ont une largeur d'environ 7 cm.

**Patentansprüche**

1. Roboter zum großformatigen Drucken in drei Dimensionen auf eine stationäre Oberfläche (11), wobei der Roboter eine Tintenstrahldruckanordnung (13), Mittel zum Verschieben und Ausrichten dieser Druckanordnung bezüglich mehrerer Achsen, mindestens eine Steuereinheit zum Steuern dieser Mittel und eine Vorrichtung zum Trocknen der auf die Oberfläche (11) aufgetragenen Tinte aufweist, wobei der Roboter (10) ein Druckroboter mit fünf motorisierten Achsen ist, wobei die Mittel zum Verschieben und Ausrichten aufweisen:

- einen Träger (15) mit drei Translationsfreiheitsgraden, der dadurch, dass er Translationen der Druckanordnung entlang der Horizontalen (Tx), Vertikalen (Ty) und in der Tiefe (Tz) erlaubt, die Positionierung der Druckanordnung (13) sicherstellt,
- ein Gelenk (16) mit zwei Rotationsfreiheitsgraden, das die Druckanordnung (13) trägt und das dadurch, dass es Rotationen (Rx,Ry) davon um zwei zueinander senkrechte Achsen erlaubt, die Ausrichtung der Druckvorrichtung sicherstellt;

**dadurch gekennzeichnet, dass** das Gelenk (16) zwei gleiche Systeme (40,40') aus Spindel (41,41')/Pleuel (42,42')/Kurbel (43,43') aufweist, die jeweils mit einem verschiebbaren Wagen (44,44') verbunden sind.

2. Roboter nach Anspruch 1, in welchem der Träger (15) aufweist:

- einen ersten mit einem Antriebssystem ausgestatteten verschiebbaren Wagen (21), der auf zwei horizontalen Schienen (22) läuft,
- einen senkrecht an dem ersten verschiebbaren Wagen (21) angebrachten Balken (26),
- einen zweiten mit einem Antriebssystem ausgestatteten verschiebbaren Wagen (28), der auf zwei vertikalen Schienen (27) läuft, die an diesem Balken (26) angebracht sind,
- eine senkrecht an dem zweiten verschiebbaren Wagen (28) angebrachte Gleitschiene (30),
- eine verschiebbare Platte (30), die entlang dieser Gleitschiene (30) läuft.

**3.** Roboter nach einem der vorstehenden Ansprüche, in welchem das Gelenk (16) die Vorrichtung zum Trocknen der Tinte trägt.

**4.** Roboter nach Anspruch 3 mit fünf Servomotoren, die jeweils den fünf Achsen dieses Roboters zugeordnet sind.

**5.** Roboter nach Anspruch 4, der am Eingang aufweist:

- mehrere optische Sensoren zum Messen des Abstands zwischen der Druckanordnung (13) und der zu bedruckenden Oberfläche (11),
- fünf Kodierer der Achsenmotoren, um die Verschiebung der Servomotoren zu kennen,
- zwei Wegendesensoren und ein Starterfassungssensor, die jeweils jeder Achse des Roboters zugeordnet sind.

**6.** Roboter nach Anspruch 5 mit einer Echtzeit-Steuervorrichtung, die aufweist:

- eine zentrale Moduleinheit,
- mindestens ein Modul zur Steuerung der Achsen,
- ein Modul für digitale Eingangs-/Ausgangssignale.

**7.** Roboter nach Anspruch 6, mit einer allgemeinen Steuervorrichtung, die aufweist:

- ein Echtzeit-Steuermodul (82),
- ein Modul (83) zur Kopplung/Übergabe und zur Aufbereitung der Sensorsignale,
- ein Versorgung/Geräte-Modul (84),
- ein Bremsversorgungsmodul (85),
- ein Sicherheitsverwaltungsmodul (86),
- eine Belüftungsanordnung (87),
- fünf digitale Motorregler (88).

**8.** Roboter nach Anspruch 7, der aufweist:

- einen ersten Datenterminal für die Steuerung der Bewegungen dieses Roboters,
- einen zweiten Datenterminal für die Roboterüberwachung, der aufweist:

  • die Koordination zwischen der Verschiebung des Roboters und der Druckarbeit,
  • die Verarbeitung des zu druckenden digitalen Bildes,
  • die Benutzerschnittstelle.

**9.** Roboter nach Anspruch 1, in welchem die Druckanordnung mindestens eine Druckereinheit (18) aufweist, die mit mehreren Druckknöpfen (14) ausgestattet ist, die unterschiedliche Farbtinten verwenden.

**10.** Roboter nach Anspruch 9, in welchem jede Druckereinheit vier Druckköpfe aufweist, die Tinten der Farbe Gelb, Cyan, Magenta bzw. Schwarz verwenden.

**11.** Roboter nach Anspruch 9, in welchem die Tinten Ultraviolettrocknungstinten sind.

**12.** Druckverfahren, das mindestens einen Roboter nach einem der vorstehenden Ansprüche verwendet, wobei das Verfahren nach einem vorausgehenden Schritt der Digitalisierung eines Bildes und des Zerlegens des Bildes in Streifen einer vorgegebenen Breite die folgenden Schritte aufweist:

- Positionieren eines zu bedruckenden Objekts bezüglich des oder der Roboter,
- Initialisieren des oder der Roboter und Positionieren der Köpfe des oder der Roboter bezüglich der Objektoberfläche an dem Ort, wo das Drucken des Bildes beginnen soll,
- Drucken des Bildes auf die Oberfläche mit aufeinanderfolgendem Drucken der verschiedenen vertikalen Streifen, aus denen das Bild besteht,

- Rückkehr zu einer Ruhekonfiguration.

**13.** Verfahren nach Anspruch 12, das einen vorausgehenden Schritt der Vorbehandlung der Oberfläche aufweist, um sie sauber und einheitlich weiß zu machen.

**14.** Verfahren nach Anspruch 12, in welchem das Drucken an der unteren linken Ecke der Oberfläche beginnt.

**15.** Verfahren nach Anspruch 12, in welchem die vertikalen Streifen eine Breite von ungefähr 7 cm haben.

**Claims**

**1.** Robot for large-format, three-dimensional printing on a fixed surface (11), comprising an inkjet printing assembly (13), means for moving and orienting said printing assembly along several axes, at least one unit for controlling said means and a device for drying the ink sprayed onto said surface (11), said robot (10) being a printing robot with five powered spindles, wherein said means for moving and orienting comprise:

- a support (15) having three degrees of freedom in translation, which assures the positioning of the printing assembly (13) by enabling translation movements thereof along horizontal (Tx), vertical (Ty) and depth (Tz) axes,
- a wrist (16) having two degrees of freedom in rotation which supports and assures the orientation of the printing assembly (13) by enabling same to rotate (Rx, Ry) along two perpendicular axes;

**characterised in that** the wrist (16) comprises two identical (40, 40') screws (41, 41')/connecting rods (42, 42')/cranks (43, 43') systems each connected to a moving carriage (44, 44').

**2.** Robot according to claim 1, wherein the support (15) comprises:

- a first moving carriage (21) provided with a drive system moving on two horizontal rails (22),
- a beam (26) fixed perpendicularly to the first moving carriage (21),
- a second moving carriage (28) provided with a drive system moving on two vertical rails (27) mounted on said beam (26),
- a slide (30) fixed perpendicularly to the second moving carriage (28),
- a moving tray (30) moving along said slide (30).

**3.** Robot according to one of the two preceding claims, wherein the wrist (16) supports the ink drying device.

**4.** Robot according to claim 3, comprising five servo-motors associated respectively with the five spindles of said robot.

**5.** Robot according to claim 4, which comprises in input:

- several optical sensors to measure the distance between the printing assembly (13) and the surface to be printed (11),
- five motor spindle encoders to know the movement of the servo-motors,
- two limit sensors and one origin acquisition sensor associated respectively with each spindle of the robot.

**6.** Robot according to claim 5 comprising a real time control device which comprises:

- a central unit module,
- at least one spindle control module,
- a digital input-output module.

**7.** Robot according to claim 6 comprising a general control device that comprises:

- a real time control module (82),
- a module (83) for interfacing/relaying and conditioning sensor signals,
- a supply/instrumentation (84) module,
- a brake supply module (85),
- a safety management module (86),

- a ventilation assembly (87),
- five motor digital variators (88).

8. Robot according to claim 7 comprising:

   - a first computer terminal dedicated to the control of the movements of said robot,
   - a second computer terminal dedicated to robot supervision comprising:

      • the coordination between the movement of the robot and the printing work,
      • the processing of the digital image to be printed,
      • the human-machine interface.

9. Robot according to claim 1, wherein the printing assembly comprises at least one printing block (18) provided with several printing heads (14) using inks of different colours.

10. Robot according to claim 9, wherein each printing block comprises four printing heads using respectively inks of yellow, cyan, magenta and black colour.

11. Robot according to claim 9, wherein the inks are ultraviolet drying inks.

12. Method of printing using at least one robot according to any of the preceding claims, which, after a prior step of digitization of an image and cutting it into strips of determined width, comprises the following steps:

   - positioning of a support with respect to the robot(s),
   - initialisation of the robot(s) and positioning of the heads thereof with respect to the surface of the support, at the spot where the printing of the image has to start,
   - printing of the image on said surface with successive printing of different vertical strips constituting the image,
   - return to a rest configuration.

13. Method according to claim 12, which comprises a prior step of preparing the surface so as to make it clean and uniform white.

14. Method according to claim 12, wherein the printing starts in the lower left hand corner of the surface.

15. Method according to claim 12, wherein the vertical strips have a width of around 7 cm.

FIG. 1

FIG. 2a

FIG. 2b

FIG. 3a

FIG. 3b

FIG. 4

FIG. 5a

FIG. 5b

FIG. 6

FIG. 7

FIG. 8

55

56

Commande
en position

Distance par
rapport à la surface

Position des moteurs

Controle de
l'impression
3D

Image à imprimer

14

# FIG. 9

FIG. 10

FIG. 11

**FIG. 12**

FIG. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2795662

- EP 0970811 A